# EUROPEAN PATENT APPLICATION

(11) **EP 4 454 913 A1**
(43) Date of publication of application: **30.10.2024**
(21) Application number: 22910556.4
(22) Date of filing: 21.10.2022
(51) Int. Cl.: B60K 1/04, H01M 10/613, H01M 10/625, H01M 10/6563, H01M 50/204, H01M 50/249, H01M 50/271

(54) **ELECTRIC WORK VEHICLE**

(30) Priority: 24.12.2021 JP 2021211651
(71) Applicant: Kubota Corporation, Osaka 556-8601 (JP)
(72) Inventor: SHIMOIKE, Yuki, Sakai-shi, Osaka 590-0823 (JP); KAWABATA, Shinichi, Sakai-shi, Osaka 590-0823 (JP)
(74) Representative: Müller-Boré & Partner Patentanwälte PartG mbB
(86) International application number: PCT/JP2022/039256
(87) International publication number: WO 2023/119834

(57) **Abstract**

An electric work vehicle including: a battery mounted in a body of the vehicle; a motor configured to be driven by electric power supplied from the battery; a travel device configured to be driven by the motor; and a plurality of connectors 43 to which electric wires H for inputting and outputting electric power to and from the battery are to be detachably connected. The battery includes a power storage unit 4A configured to store electric power and a battery cover 4B housing the power storage unit 4A, the battery cover 4B includes a thick wall portion 41 that is thicker than other portions of the battery cover 4B, and the connectors 43 are disposed on the thick wall portion 41.

## Description

### Technical Field

The present invention relates to an electric work vehicle including: a battery mounted in a body of the vehicle; a motor configured to be driven by electric power supplied from the battery; and a travel device configured to be driven by the motor.

### Background Art

The electric work vehicle described in Patent Document 1 is already known as an example of the above-described electric work vehicle. This conventional electric work vehicle ("tractor" in Patent Document 1) is capable of travelling by means of the travel device driven by electric power supplied from the battery.

### Prior Art Documents

### Patent Documents

Patent Document 1: JP 2021-000953A

### Disclosure of the Invention

### Problem to be Solved by the Invention

In the conventional electric work vehicle, it is envisioned that electric power is supplied from the battery to the motor installed in the travel device, an electric wire for supplying electric power from the battery to the motor is connected to the battery, an electric wire for supplying electric power from a charger to the battery is connected to the battery, and these electric wires are connected to a connector supported by an outer wall of the battery.

With such a configuration, the battery needs to include at least a connector to which an electric wire for supplying electric power from the battery to the motor is to be connected, and a connector to which an electric wire for supplying electric power from the charger to the battery is to be connected.

When the battery cover that constitutes the outer wall of the battery has a small thickness, the battery cover is easily deformed. If the battery cover is deformed, a gap may be created between the battery cover and the connector, and there is a risk that water may enter the inside of the battery through the gap. In order to prevent water from entering the inside of the battery in such a manner, it is necessary to increase the thickness of the battery cover that constitutes the outer wall of the battery, and firmly fix the connector to the battery cover. However, such a configuration is disadvantageous in that it increases the cost of materials and makes the battery heavier.

The present invention aims to provide an electric work vehicle capable of preventing water from entering the inside of the battery through the gap between the battery cover and the connector, while suppressing the increase in the cost of materials and the weight of the battery.

### Means for Solving Problem

An electric work vehicle according to the present invention includes: a battery mounted in a body of the vehicle; a motor configured to be driven by electric power supplied from the battery; a travel device configured to be driven by the motor; and a plurality of connectors to which electric wires for inputting and outputting electric power to and from the battery are to be detachably connected. The battery includes a power storage unit configured to store electric power and a battery cover housing the power storage unit, the battery cover includes a thick wall portion that is thicker than other portions of the battery cover, and the connectors are disposed on the thick wall portion.

According to this invention, the portions of the battery cover other than the thick wall portion are thinner than the thick wall portion. With this configuration, it is possible to suppress the cost of materials and also to suppress the weight of the battery. In addition, since the connectors are provided on the thick wall portion, the connectors are provided on a stronger portion of the battery cover. With this configuration, the cover is less likely to deform, and the connectors can be firmly supported on the battery cover with fasteners such as bolts, for example. As a result, it is possible to prevent water from entering the inside of the battery through the gap.

In the present invention, it is preferable that the thick wall portion is constituted by a plate-shaped member that is a separate member from the battery cover.

Since the thick wall portion on which the connectors are disposed is constituted by a member that is a separate member from the battery cover, when maintenance work is to be performed on the connectors and their surroundings, removing the thick wall portion from the battery cover makes the work easier.

In the present invention, it is preferable that the thick wall portion is included in a front wall portion of the battery cover, and the plurality of connectors are disposed on a front surface of the thick wall portion.

With this configuration, the connectors are disposed on the front wall portion of the battery cover. Air is likely to pass by the front wall portion of the battery cover during travel. This air blows away dust and the like on and around the connectors disposed on the front surface of the thick wall portion, making it difficult for dust and the like to accumulate thereon. As a result, the connectors are prevented from failing due to accumulation of dust and the like on and around the connectors.

In the present invention, it is preferable that at least one of the plurality of connectors is a connector to which an electric wire for charging the power storage unit with electric power supplied from an external power source is to be connected.

With this configuration, it is possible to prevent the battery cover from deforming at the connector to which the electric wire for charging the power storage unit is connected, and to make it less likely that a gap will be formed between the battery cover and the connector.

In the present invention, it is preferable that the electric work vehicle further includes an inverter configured to convert DC power supplied from the power storage unit to AC power, and supply the AC power to the motor, and at least one of the plurality of connectors is a connector to which an electric wire for outputting electric power from the power storage unit to the inverter is to be connected.

With this configuration, it is possible to prevent the battery cover from deforming at the connector to which the electric wire for outputting electric power from the power storage unit to the inverter is connected, and to make it less likely that a gap will be formed between the battery cover and the connector.

In the present invention, it is preferable that the electric work vehicle further includes a DC-DC converter configured to output the DC voltage from the power storage unit after adjusting a magnitude thereof, and at least one of the plurality of connectors is a connector to which an electric wire for outputting electric power from the power storage unit to the DC-DC converter is to be connected.

With this configuration, it is possible to prevent the battery cover from deforming at the connector to which the electric wire for outputting electric power from the power storage unit to the DC-DC converter is connected, and to make it less likely that a gap will be formed between the battery cover and the connector.

In the present invention, it is preferable that the battery includes a cooling fan configured to cool the power storage unit, and at least one of the plurality of connectors is a connector to which an electric wire for inputting electric power for driving the cooling fan is to be connected.

With this configuration, it is possible to prevent the battery cover from deforming at the connector to which the electric wire for inputting electric power for driving the cooling fan is connected, and to make it less likely that a gap will be formed between the battery cover and the connector.

In the present invention, it is preferable that the electric work vehicle further includes a pressure regulator configured to regulate an air pressure inside the battery cover, and the pressure regulator is disposed on the thick wall portion.

With this configuration, the pressure regulator is disposed on the thick wall portion. For example, when the air pressure inside the battery cover increases, the pressure regulator receives the pressure from inside the battery cover. With the configuration, even if the air pressure inside the battery cover increases and the pressure regulator receives the pressure from inside the battery cover, the pressure regulator is firmly supported on the thick wall portion.

In the present invention, it is preferable that pressure regulator is disposed on a surface extending in a vertical direction of the thick wall portion.

With this configuration, the pressure regulator is provided on a surface extending in the vertical direction. Therefore, even if water adheres to the pressure regulator, it easily flows down. As a result, it is possible to prevent the pressure regulating function from deteriorating due to water adhering to the pressure regulator.

In the present invention, it is preferable that the thick wall portion includes a recessed portion that is recessed from an outer surface of the thick wall portion toward an inside of the battery cover, and the pressure regulator is disposed on the recessed portion with a gap between the outer surface of the thick wall portion and the pressure regulator.

With this configuration, since a gap is formed between the outer surface of the thick wall portion and the pressure regulator, water adhering to the battery cover and flowing toward the pressure regulator falls into this gap. As a result, it is possible to reduce the adhesion of water to the pressure regulator, and it is possible to prevent the pressure regulating function from deteriorating due to water adhering to the pressure regulator.

In the present invention, it is preferable that the pressure regulator is disposed so as to be lined up in a horizontal direction with an electric wire connected to one connector of the plurality of connectors.

With this configuration, even if water or the like flies in the horizontal direction, it is blocked by the electric wire, so that it is possible to reduce the adhesion of water or the like to the pressure regulator. As a result, it is possible to prevent the pressure regulating function from deteriorating due to water adhering to the pressure regulator.

### Brief Description of the Drawings

FIG. 1 is a left side view of a tractor.
FIG. 2 is a left side view showing an arrangement of an inverter and so on.
FIG. 3 is a diagram showing a flow of motive power transmission.
FIG. 4 is a plan view of a battery.
FIG. 5 is a front view of the battery.
FIG. 6 is a cross-sectional view showing a configuration of a connector.

### Best Mode for Carrying out the Invention

An embodiment of the present invention will be described based on the drawings. In the following description, the direction of an arrow F and the direction of an arrow B in the drawings will be respectively referred to as "the front side" and "the rear side", and the direction of an arrow L and the direction of an arrow R in the drawings will be respectively referred to as "the left side" and "the right side" unless otherwise stated. Also, the direction of an arrow U and the direction of an arrow D in the drawings will be respectively referred to as "the upper side" and "the lower side".

### Overall Configuration of Tractor

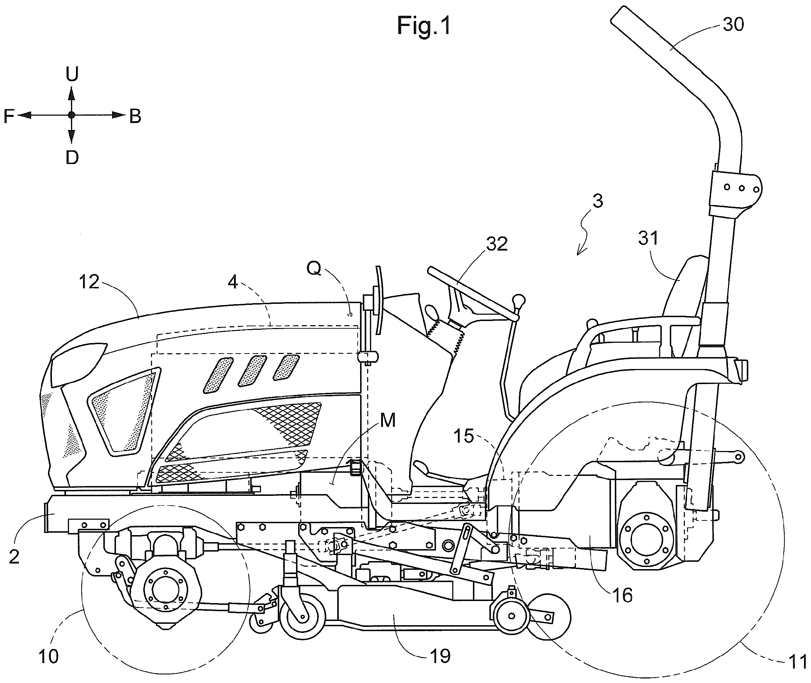

The following describes a tractor according to the present embodiment. As shown in FIG. 1, the tractor includes left and right front wheels 10, left and right rear wheels 11, and a cover member 12.

The tractor also includes a body frame 2 and a driving section 3. The body frame 2 is supported by the left and right front wheels 10 and the left and right rear wheels 11.

The cover member 12 is disposed in a front portion of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit on the driver's seat 31. Accordingly, the operator can get on the driving section 3. The operator steers the left and right front wheels 10 by operating the steering wheel 32. The operator can perform various driving operations in the driving section 3.

The tractor includes a travel battery 4 (corresponding to the "battery" according to the present invention). The cover member 12 is configured to be pivotable about an opening/closing axis Q extending in the left-right direction of the body. Accordingly, the cover member 12 is configured to be openable and closable. When the cover member 12 is closed, the travel battery 4 is covered by the cover member 12.

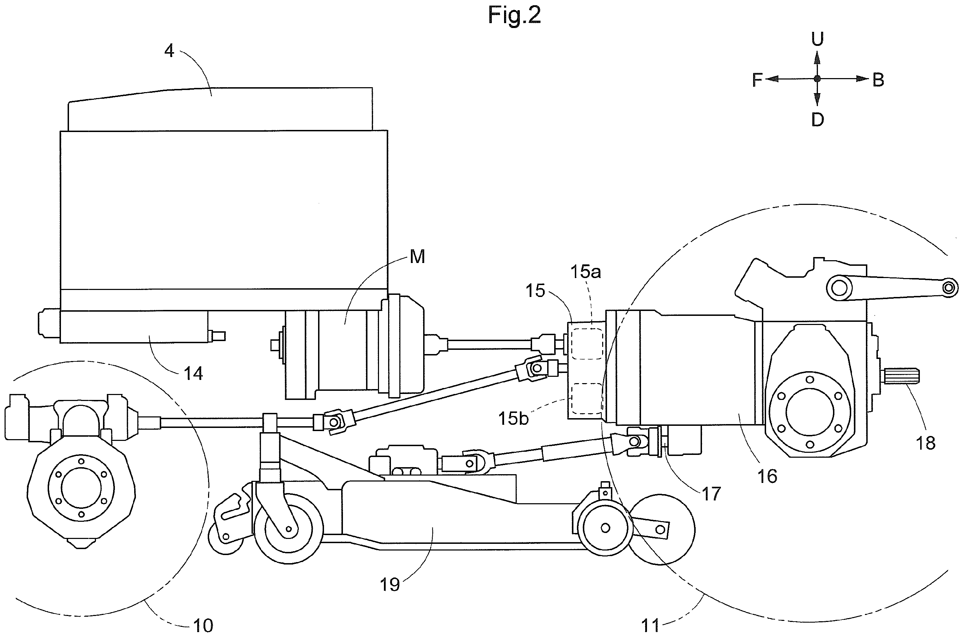

As shown in FIG. 2, the tractor includes an inverter 14 and a motor M. The travel battery 4 supplies power to the inverter 14. The inverter 14 converts DC power supplied from the travel battery 4 to AC power, and supplies the AC power to the motor M. The motor M is driven by the AC power supplied from the inverter 14.

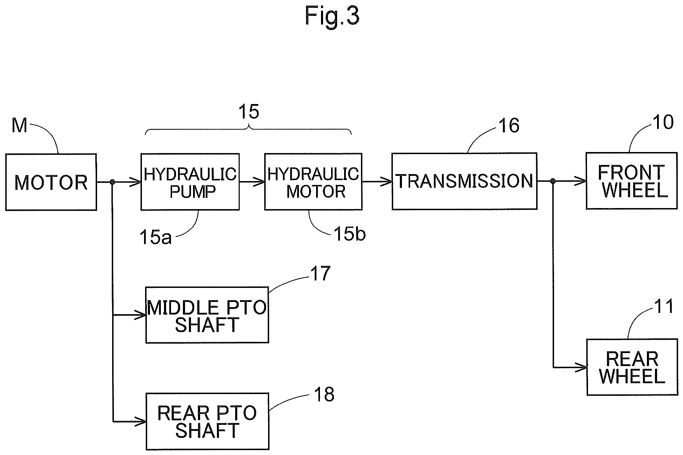

As shown in FIGS. 2 and 3, the tractor includes a hydraulic continuously variable transmission 15 and a transmission 16. As shown in FIG. 3, the hydraulic continuously variable transmission 15 includes a hydraulic pump 15a and a hydraulic motor 15b.

The hydraulic pump 15a is driven by rotational motive power transmitted from the motor M. As a result of the hydraulic pump 15a being driven, rotational motive power is output from the hydraulic motor 15b. The hydraulic continuously variable transmission 15 is configured to change the speed of rotational motive power between the hydraulic pump 15a and the hydraulic motor 15b. Also, the hydraulic continuously variable transmission 15 is configured to be capable of changing the transmission ratio in a stepless manner.

The rotational motive power output from the hydraulic motor 15b is transmitted to the transmission 16. The speed of the rotational motive power transmitted to the transmission 16 is changed by a gear transmission mechanism included in the transmission 16, and the rotational motive power is distributed to the left and right front wheels 10 and the left and right rear wheels 11 (corresponding to the "travel device" according to the present invention). Thus, the left and right front wheels 10 and the left and right rear wheels 11 are driven.

As shown in FIGS. 2 and 3, the tractor also includes a middle PTO shaft 17 and a rear PTO shaft 18. Rotational motive power output from the motor M is distributed to the hydraulic pump 15a, the middle PTO shaft 17, and the rear PTO shaft 18. The middle PTO shaft 17 and the rear PTO shaft 18 are rotated by the distributed rotational motive power.

If a work device is connected to the middle PTO shaft 17 or the rear PTO shaft 18, the work device is driven by rotational motive power transmitted by the middle PTO shaft 17 or the rear PTO shaft 18. For example, in the present embodiment, a grass cutting device 19 is connected to the middle PTO shaft 17 as shown in FIG. 2. The grass cutting device 19 is driven by rotational motive power transmitted by the middle PTO shaft 17.

### Configuration of Travel Battery

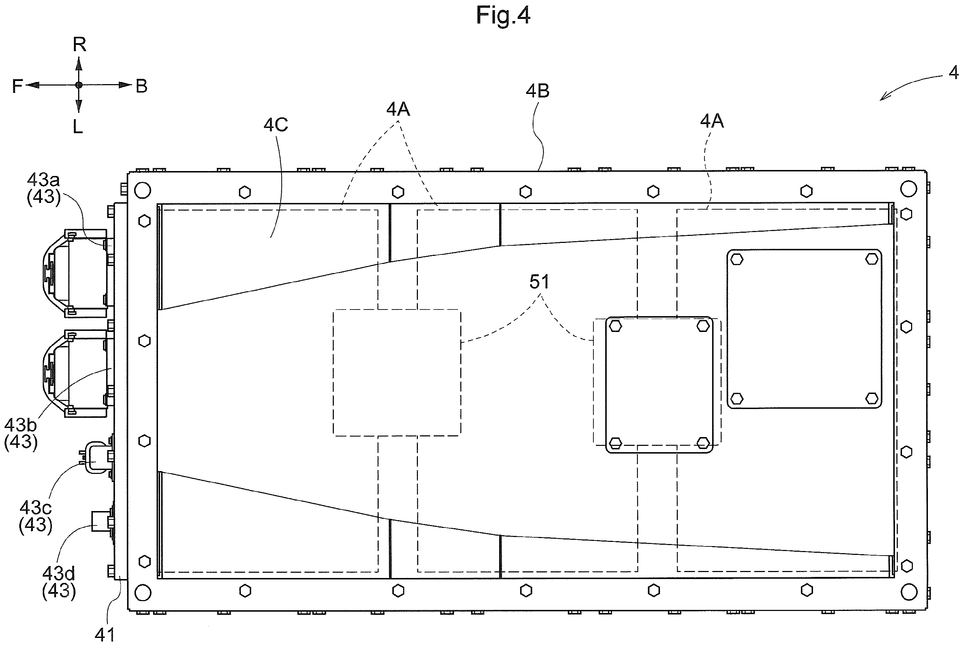

As shown in FIG. 4, the travel battery 4 disposed in the body of the tractor includes a power storage unit 4A that stores electric power, a battery cover 4B that houses the power storage unit 4A, and an upper cover 4C that is disposed above the battery cover 4B and covers, for example, the plurality of cooling fans 51 for cooling the power storage unit 4A.

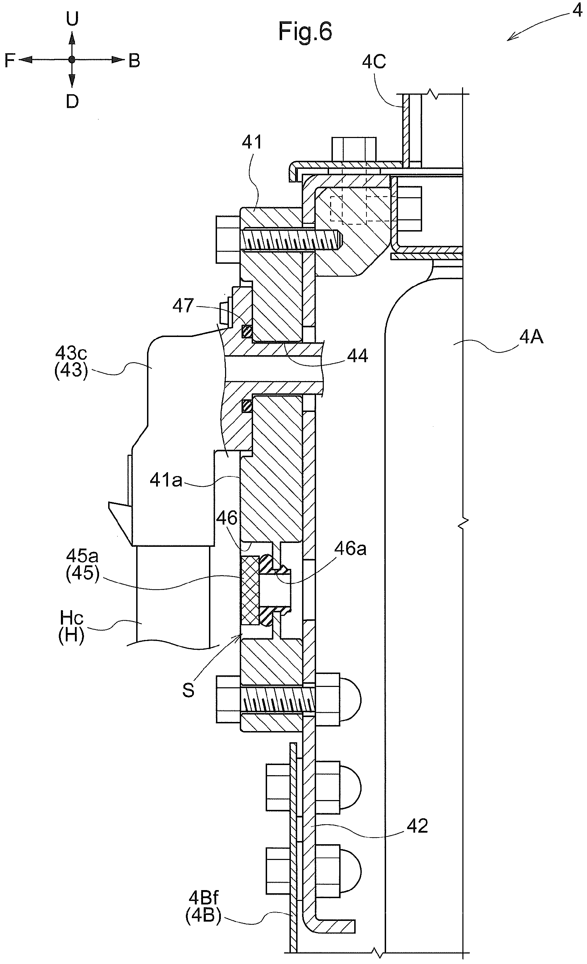

As shown in FIG. 6, a front wall portion 4Bf of the battery cover 4B includes a thick wall portion 41 that is thicker than other portions in the battery cover 4B. The surface of the thick wall portion 41 extends in the vertical and horizontal directions with respect to the body. The thick wall portion 41 is made of a separate member from the battery cover 4B and is constituted by a plate-shaped member made of aluminum.

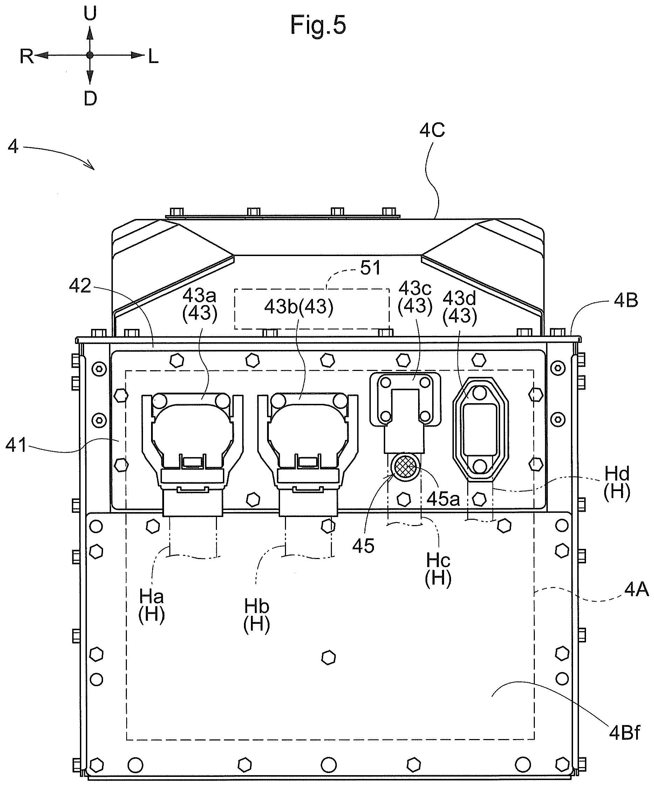

As shown in FIGS. 5 and 6, the thick wall portion 41 is supported by the battery cover 4B with the mounting member 42 interposed therebetween. The mounting member 42 is fastened and secured to the front wall portion 4Bf by a plurality of bolts. The thick wall portion 41 is fastened and secured to the mounting member 42 by a plurality of bolts.

The front surface of the thick wall portion 41 is provided with a plurality of connectors 43 to which harnesses H (corresponding to the "electric wires" according to the present invention) for inputting and outputting electric power to and from the travel battery 4 are to be detachably connected. The following connectors are arranged as the plurality of connectors 43, in order from the right side of the body: a connector 43a for connecting a harness Ha for charging the power storage unit 4A with electric power supplied from an external power source (not shown); a connector 43b for connecting a harness Hb for outputting electric power from the power storage unit 4A to the inverter 14; a connector 43c for connecting a harness Hc for outputting electric power from the power storage unit 4A to a DC-DC converter (not shown); and a connector 43d to which a harness Hd for inputting electric power for driving the cooling fans 51 are connected.

Here, the DC-DC converter outputs the DC voltage from the power storage unit 4A after adjusting the magnitude thereof. The electric power output from this DC-DC converter is input to the connector 43d via the harnesses H, for example, and is used to drive the cooling fans 51.

The connector 43a, the connector 43b, the connector 43c, and the connector 43d are each fastened and secured by a plurality of bolts.

As shown in FIG. 6, an insertion hole 44 is formed in the thick wall portion 41 in order to pass the electric wires passing through the inside of the connector 43c to the inside of the battery cover 4B. Furthermore, an opening is formed in the mounting member 42 at a position corresponding to the insertion hole 44.

The connector 43c is provided with a sealing member 47 on the surface facing the thick wall portion 41. The sealing member 47 is configured to abut against the thick wall portion 41 so as to surround the outer periphery of the insertion hole 44 in the thick wall portion 41 when the connector 43c is fastened and secured to the thick wall portion 41. With this configuration, even if water enters the gap between the connector 43c and the thick wall portion 41, the water is blocked by the sealing member 47, and is prevented from entering the inside of the battery cover 4B through the insertion hole 44. The connector 43a, the connector 43b, and the connector 43d are each provided with the same configuration as the connector 43c.

### Configuration of Pressure Regulator

As shown in FIGS. 5 and 6, a pressure regulator 45 configured to regulate the air pressure inside the battery cover 4B is provided on a surface of the thick wall portion 41 extending in the vertical direction.

The pressure regulator 45 includes a membrane filter that allows air to pass through but does not allow water to pass through. For example, when the temperature of the power storage unit 4A decreases and the air pressure inside the battery cover 4B decreases, pressure is applied to the membrane filter from the outside due to the pressure difference with the outside air pressure. The pressure regulator 45 is configured so that the openings in the membrane filter are widened by the pressure from the outside and allow air to pass through.

The pressure regulator 45 is disposed below the connector 43c in the thick wall portion 41, and the pressure regulator 45 and the connector 43c are lined up in the vertical direction. The connector 43c is configured such that the harness Hc connected thereto extends downward. With this configuration, the pressure regulator 45 is disposed so as to be lined up in the horizontal direction with the harness Hc connected to the connector 43c, and the pressure regulator 45 and the harness Hc overlap each other when viewed in the front-rear direction.

As shown in FIG. 6, a recessed portion 46 is formed in the thick wall portion 41, which is recessed from an outer surface 41a of the thick wall portion 41 toward the inside of the battery cover 4B. A through hole 46a is further formed at the bottom of the recessed portion 46, which penetrates to reach the inside of the battery cover 4B. An opening is formed in the mounting member 42 at a position corresponding to the through hole 46a. With this configuration, air flows back and forth between the inside and outside of the battery cover 4B via the pressure regulator 45.

The outer surface 45a of the pressure regulator 45 and the outer surface 41a of the thick wall portion 41 are at substantially the same position in the front-rear direction with respect to the body. In addition, a gap S is formed between the pressure regulator 45 and the outer surface 41a of the thick wall portion 41.

### Modifications

Hereinafter, a modification of the above embodiment will be illustrated.
(1) Although the above embodiment describes an example of a configuration in which the thick wall portion 41 is formed as a separate member from the battery cover 4B, the present invention is not limited to the above embodiment, and the thick wall portion 41 may be formed integrally with the battery cover 4B.
(2) Although the above embodiment describes an example of a configuration in which the thick wall portion 41 is included in the front wall portion 4Bf of the battery cover 4B, the present invention is not limited to the above embodiment, and the thick wall portion 41 may be included in the left and right side walls, the bottom wall, or the like of the battery cover 4B.
(3) Although the above embodiment describes an example of a configuration in which the thick wall portion 41 is constituted by a plate-shaped member made of aluminum, the present invention is not limited to the above embodiment, and the thick wall portion 41 may be constituted by a plate-shaped member made of another metal such as stainless, or a plate-shaped member made of resin.
(4) Although the above embodiment describes an example of a configuration in which the thick wall portion 41 is provided with one connector 43a, one connector 43b, one connector 43c, and one connector 43d in order from the right side of the body, the present invention is not limited to the above embodiment. For example, a plurality of connectors 43a, a plurality of connectors 43b, a plurality of connectors 43c, and a plurality of connectors 43d may be provided as spares. In addition, the connector 43a, the connector 43b, the connector 43c, and the connector 43d may be arranged at different positions from those in the above embodiment. The connectors 43 need only be configured such that the harness H for inputting and outputting electric power to and from the travel battery 4 can be connected thereto and may be configured such that a harness H for a purpose other than that in the above embodiment can be connected thereto.
(5) Although the above embodiment describes an example of a configuration in which the pressure regulator 45 includes a membrane filter, the present invention is not limited to the above embodiment, and the pressure regulator 45 may be constituted by a pressure regulator valve or the like.
(6) Although the above embodiment describes an example of a configuration in which the pressure regulator 45 is disposed so as to be lined up in the horizontal direction with the harness H connected to the connector 43c, the present invention is not limited to the above embodiment. The pressure regulator 45 may be disposed so as to be lined up in the horizontal direction with the harness H connected to the connector 43a, the connector 43b, or the connector 43d.
(7) Although the above embodiment describes an example of a configuration in which the recessed portion 46 is formed in the thick wall portion 41 and the pressure regulator 45 is disposed on the recessed portion 46, the present invention is not limited to the above embodiment, and a configuration without the recessed portion 46 may be employed.
(8) Although the above embodiment describes an example of a configuration in which a gap S is formed between the pressure regulator 45 and the outer surface 41a of the thick wall portion 41, the present invention is not limited to the above embodiment, and a configuration in which the gap S is not formed may be employed.

Note that the configurations disclosed in the above embodiments (including the modification, the same applies hereinafter) are applicable in combination with the configurations disclosed in the other embodiments as long as no contradiction occurs. In addition, the embodiments disclosed in this specification are illustrative, and the embodiments of the present invention are not limited thereto and can be modified as appropriate without departing from the purpose of the present invention.

### Industrial Applicability

The present invention is applicable not only to tractors but also to various electric work vehicles such as combines, rice transplanters, and construction machines.

### Description of Reference Signs

4: Travel Battery (Battery)
4A: Power Storage Unit
4B: Battery Cover
4Bf: Front Wall Portion
14: Inverter
41: Thick Wall Portion
41a: Outer Surface
43: Connector
45: Pressure Regulator
46: Recessed Portion
51: Cooling Fan
H: Harness (Electric Wire)
M: Motor
S: Gap

## Claims

1. An electric work vehicle comprising:
a battery mounted in a body of the vehicle;
a motor configured to be driven by electric power supplied from the battery;
a travel device configured to be driven by the motor; and
a plurality of connectors to which electric wires for inputting and outputting electric power to and from the battery are to be detachably connected,
wherein the battery includes a power storage unit configured to store electric power and a battery cover housing the power storage unit,
the battery cover includes a thick wall portion that is thicker than other portions of the battery cover, and
the connectors are disposed on the thick wall portion.

2. The electric work vehicle according to claim 1,
wherein the thick wall portion is constituted by a plate-shaped member that is a separate member from the battery cover.

3. The electric work vehicle according to claim 1 or 2,
wherein the thick wall portion is included in a front wall portion of the battery cover, and
the plurality of connectors are disposed on a front surface of the thick wall portion.

4. The electric work vehicle according to any one of claims 1 to 3,
wherein at least one of the plurality of connectors is a connector to which an electric wire for charging the power storage unit with electric power supplied from an external power source is to be connected.

5. The electric work vehicle according to any one of claims 1 to 4, further comprising
an inverter configured to convert DC power supplied from the power storage unit to AC power, and supply the AC power to the motor,
wherein at least one of the plurality of connectors is a connector to which an electric wire for outputting electric power from the power storage unit to the inverter is to be connected.

6. The electric work vehicle according to any one of claims 1 to 5, further comprising
a DC-DC converter configured to output the DC voltage from the power storage unit after adjusting a magnitude thereof,
wherein at least one of the plurality of connectors is a connector to which an electric wire for outputting electric power from the power storage unit to the DC-DC converter is to be connected.

7. The electric work vehicle according to any one of claims 1 to 6,
wherein the battery includes a cooling fan configured to cool the power storage unit, and
at least one of the plurality of connectors is a connector to which an electric wire for inputting electric power for driving the cooling fan is to be connected.

8. The electric work vehicle according to any one of claims 1 to 7, further comprising
a pressure regulator configured to regulate an air pressure inside the battery cover,
wherein the pressure regulator is disposed on the thick wall portion.

9. The electric work vehicle according to claim 8,
wherein the pressure regulator is disposed on a surface extending in a vertical direction of the thick wall portion.

10. The electric work vehicle according to claim 8 or 9,
wherein the thick wall portion includes a recessed portion that is recessed from an outer surface of the thick wall portion toward an inside of the battery cover, and
the pressure regulator is disposed on the recessed portion with a gap between the outer surface of the thick wall portion and the pressure regulator.

11. The electric work vehicle according to any one of claims 8 to 10,
wherein the pressure regulator is disposed so as to be lined up in a horizontal direction with an electric wire connected to one connector of the plurality of connectors.
